# EUROPEAN PATENT APPLICATION

(11) **EP 4 636 357 A1**
(43) Date of publication of application: **22.10.2025**
(21) Application number: 24170220.8
(22) Date of filing: 15.04.2024
(51) Int. Cl.: G01C 21/30, G01S 19/40, G01S 19/07

(54) **DETERMINATION OF GNSS CORRECTIONS USING MAP MATCHING ERRORS**

(71) Applicant: TomTom Traffic B.V., 1011 AC Amsterdam (NL)
(72) Inventor: Witte, Nikolaus, 1011 AC Amsterdam (NL); Karge, Antonia, 1011 AC Amsterdam (NL); Byfut, Andreas, 1011 AC Amsterdam (NL); Schilling, David, 1011 AC Amsterdam (NL)
(74) Representative: Swindell & Pearson Limited

(57) **Abstract**

Certain examples of the present disclosure provide a method 100 comprising: generating differential position data 505 for use in adjusting Global Navigation Satellite System, GNSS, positions (103), wherein the differential position data is indicative of a difference in position between a GNSS position (103) and an actual position (104) represented by the GNSS position, wherein the difference in position is determined based at least in part on: first and second Map Matching Errors, MMEs (101_1, 101_2), respectively associated with first and second segments (102_1, 102_2) of navigable elements of a network of navigable elements represented in a map, and orientations (202_1, 202_2) of the first and second segments.

## Description

### TECHNOLOGICAL FIELD

Examples of the disclosure relate to positioning. Some examples relate to a method, an apparatus and a computer program for generating differential position data for use in adjusting Global Navigation Satellite System, GNSS, positions.

### BACKGROUND

Conventional GNSS positioning, such as Global Positioning System, GPS, based positioning (e.g. via a GNSS/GPS receiver that includes GNSS/GPS signal reception and processing functionality for determining a location of the receiver) is not always optimal.

Differential GPS is method for correcting GPS positioning errors caused by run-time errors/deviations of GPS satellite signals which may arise due to, for example, the GPS satellite signal being slowed down when passing through the ionosphere. In differential GPS, a network of a plurality of fixed base-stations, each with a known precise location that measures a shift/offset/differential position of a GPS position (i.e. a position derived from GPS signals, also referred to as a GPS fix) with respect to a precise/accurate and known actual position of the base-station. This shift is then broadcasted and applied by each GPS device in the vicinity. However, differential GPS is not always optimal due to its infrastructure requirements, i.e. in relation to necessitating a network of fixed base-stations.

In some circumstances it can be desirable to improve positioning accuracy. In some examples it can be desirable to provide an alternative (or additional) GNSS positioning enhancement technique to that of conventional differential GPS.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various, but not necessarily all, examples of the present invention there are there are provided examples as claimed in the appended claims. Any examples and features described in this specification that do not fall under the scope of the independent claims are to be interpreted as examples useful for understanding various embodiments of the invention.

According to various, but not necessarily all, examples there is provided a method comprising:
generating differential position data for use in adjusting Global Navigation Satellite System, GNSS, positions, wherein the differential position data is indicative of a difference in position between a GNSS position and an actual position represented by the GNSS position, wherein the difference in position is determined based at least in part on:
first and second Map Matching Errors, MMEs respectively associated with first and second segments of navigable elements of a network of navigable elements represented in a map, and
orientations of the first and second segments.

According to various, but not necessarily all, examples there is provided a chipset comprising processing circuitry configured to perform the above-mentioned method.

According to various, but not necessarily all, examples there is provided a module, circuitry, device and/or system comprising means for performing the above-mentioned method.

According to various, but not necessarily all, examples there is provided an apparatus comprising:
means for generating differential position data for use in adjusting Global Navigation Satellite System, GNSS, positions, wherein the differential position data is indicative of a difference in position between a GNSS position and an actual position represented by the GNSS position, wherein the difference in position is determined based at least in part on:
first and second Map Matching Errors, MMEs respectively associated with first and second segments of navigable elements of a network of navigable elements represented in a map, and
orientations of the first and second segments.

According to various, but not necessarily all, examples there is provided a computer program comprising instructions, which when executed by an apparatus, cause the apparatus to perform:
generating differential position data for use in adjusting Global Navigation Satellite System, GNSS, positions, wherein the differential position data is indicative of a difference in position between a GNSS position and an actual position represented by the GNSS position, wherein the difference in position is determined based at least in part on:
first and second Map Matching Errors, MMEs respectively associated with first and second segments of navigable elements of a network of navigable elements represented in a map, and
orientations of the first and second segments.

According to various, but not necessarily all, examples there is provided an apparatus comprising:
at least one processor; and
at least one memory storing instructions that, when executed by the at least one processor, cause the apparatus at least to:
   generate differential position data for use in adjusting Global Navigation Satellite System, GNSS, positions, wherein the differential position data is indicative of a difference in position between a GNSS position and an actual position represented by the GNSS position, wherein the difference in position is determined based at least in part on:
   first and second Map Matching Errors, MMEs respectively associated with first and second segments of navigable elements of a network of navigable elements represented in a map, and
   orientations of the first and second segments.

According to various, but not necessarily all, examples there is provided a non-transitory computer readable medium encoded with instructions that, when executed by at least one processor, causes at least the following to be performed:
generate differential position data for use in adjusting Global Navigation Satellite System, GNSS, positions, wherein the differential position data is indicative of a difference in position between a GNSS position and an actual position represented by the GNSS position, wherein the difference in position is determined based at least in part on:
first and second Map Matching Errors, MMEs respectively associated with first and second segments of navigable elements of a network of navigable elements represented in a map, and
orientations of the first and second segments.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the first MME is an MME for a first GNSS position that has been map-matched to the first segment, wherein the first MME is indicative of a first displacement of the first GNSS position relative to the first segment; and the second MME is an MME for a second GNSS position that has been map matched to the second segment, wherein the second MME is indicative of a second displacement of the second GNSS position relative to the second segment.

In some but not necessarily all examples,, the method further comprises:
determining a first orientation of the first segment;
determining a second orientation of the second segment;
determining first and second perpendicular orientations, wherein the first and second perpendicular orientations are perpendicular to the first and second orientations respectively; and
wherein the difference in position is determined based at least in part on:
   the first and second perpendicular orientations.

In some but not necessarily all examples, the method further comprises determining one or more adjusted GNSS positions by adjusting one or more GNSS positions based at least in part on the differential position data.

In some but not necessarily all examples, the method further comprises identifying a lane of a road based at least in part on the one or more adjusted GNSS positions.

In some but not necessarily all examples, the method further comprises sending, to one or more GNSS-based positioning devices, the differential position data for enabling the one or more GNSS-based positioning devices to adjust their determined GNSS positions.

In some but not necessarily all examples, the method further comprises selecting a plurality of pairs of segments, wherein each pair comprises different pair of first and second segments.

In some but not necessarily all examples, each pair is selected based at least in part on a determination that one or more of the following criteria is met:
the first and second orientations are not parallel;
the first and second orientations are substantially perpendicular; and
an orthogonality of the first and second orientations.

In some but not necessarily all examples, the method further comprises:
generating differential position data for each of the plurality of pairs; and
determining an average of the differential position data for each of the plurality of pairs

In some but not necessarily all examples, the average is a weighted average, wherein a weighting applied to differential position data of a particular pair of the plurality of pairs is based at least in part on an orthogonality of the first and second segments of the particular pair.

In some but not necessarily all examples, the method further comprises generating a reliability metric for the differential position data, wherein the reliability metric is based, at least in part, on an orthogonality of the first and second orientations.

In some but not necessarily all examples, the first and second segments are selected based at least in part on a determination that the first and second segments are within an area of the map.

In some but not necessarily all examples, the area of the map is determined based at least in part on a geographic area within which GNSS drift for GNSS positions within the geographic area due to atmospheric perturbations is estimated to be the substantially same.

In some but not necessarily all examples, at least one of:
the second MME is determined within a time period from when the first MME is determined; and/or
the second GNSS position is determined within a time period from when the first GNSS position is determined.

In some but not necessarily all examples, the time period is determined based at least in part on a time interval during which GNNS drift due to atmospheric perturbations is estimated to be the same.

In some but not necessarily all examples, the first and second segments are selected based at least in part on a determination that each of the first and second segments represents a single lane road.

In some but not necessarily all examples, at least one of:
the first and second MMEs are derived, at least in part, from respective first and second probe data from respective first and second probes wherein the first and second probe data comprises an indication of the first and second GNSS positions respectively; and
the first and second MMEs are obtained from MME data wherein the MME data comprises data indicative of a plurality of MMEs associated with the plurality of segments, wherein each MME is indicative of a lateral displacement of a GNSS position relative to a segment to which the GNSS position has been matched.

In some but not necessarily all examples, the first and second directions are determined from map data, wherein the map data is indicative of positions (i.e. locations and orientations/directions) of the plurality of segments.

In some but not necessarily all examples, generating the differential position comprises defining a first vector space having:
a first basis vector that is based at least in part on the first MME and the first perpendicular direction; and
a second basis vector that is based at least in part on the second MME and the second perpendicular direction.

In some but not necessarily all examples, generating the differential position comprises performing a vector space bases transformation of the first vector space to a second vector space.

In some but not necessarily all examples, the second vector space comprises at least one of the following:
a vector space having standard bases;
a vector space having cartesian coordinates;
a vector space corresponding to the map's vector space;
first and second bases corresponding to first and second bases used by the map; and
first and second bases aligned with longitude and latitude directions.

In some but not necessarily all examples, generating the differential position further comprises defining first and second vectors respectively based, at least in part:
the first and second MMEs, and
the first and second perpendicular directions.

In some but not necessarily all examples:
magnitudes of the first and second vectors are respectively based at least in part on magnitudes of the first and second MMEs respectively; and
directions of the first and second vectors are respectively based at least in part on the first and second perpendicular directions.

In some but not necessarily all examples, the method further comprises:
defining the first vector as a first basis of the first vector space.
defining the second vector as a second basis of the first vector space.

In some but not necessarily all examples, there is provided a method comprising:
generating a differential position, wherein the differential position is indicative of a difference in position between a GNSS position and an actual position represented by the GNSS position, wherein the differential position is generated based at least in part on:
first and second MMEs respectively associated with first and second segments of navigable elements of a network of navigable elements represented in a map, and
directions of the first and second directions.

In some but not necessarily all examples, there is provided an apparatus comprising means for performing any of the above-mentioned methods.

In some but not necessarily all examples, the apparatus is at least one of the following:
a server, a portable navigation device, an in-vehicle navigation device; a wireless communications device with GNNS positioning capability.

In some but not necessarily all examples, there is provided a computer program comprising instructions which, when executed by an apparatus, cause the apparatus to perform the any of the above-mentioned methods.

In some but not necessarily all examples, the computer program is stored on a computer readable storage medium.

While the above examples and optional features are described separately, it is to be understood that their provision in all possible combinations and permutations is contained within the disclosure. It is to be understood that various examples can comprise any or all of the features described in respect of other examples, and vice versa. Also, it is to be appreciated that any one or more or all of the features, in any combination, may be implemented by/comprised in/performable by an apparatus, a method, and/or computer program instructions as desired, and as appropriate. The description of a function should additionally be considered to also disclose any means suitable for performing that function.

### BRIEF DESCRIPTION OF THE DRAWINGS

Some examples will now be described with reference to the accompanying drawings in which:
FIG. 1 schematically illustrates a method in accordance with an example of the subject matter described herein;
FIG. 2 schematically illustrates an apparatus in accordance with an example of the subject matter described herein;
FIG. 3 schematically illustrates a computer program in accordance with an example of the subject matter described herein;
FIG. 4 schematically illustrates an example of the subject matter disclosed herein;
FIGs. 5 and 6 schematically illustrate the first segment and the first Map Matching Error of FIG. 4;
FIGs. 7 and 8 schematically illustrate the second segment and the second Map Matching Error of FIG. 4;
FIGs. 9 and 10 schematically illustrates an example of determining a position differential;
FIG. 11 schematically illustrates another example of the subject matter disclosed herein; and
FIG. 12 schematically illustrates a further example of determining a position differential.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the description and drawings, a reference number without a subscript (e.g. 123) can be used as a generic reference to a feature or class/set of features. A reference number with a subscript (e.g. 123_1) can be used as a specific reference, e.g. to differentiate different instances of a feature or class/set of features. The subscript can comprise two digits including a first digit that labels a group of instances and a second digit that labels different instances in the group. A numerical type subscript index (e.g. 123_1) can be used to indicate a specific instance of a class/a member of a set; and a non-specific instance of the class (member of the set) can be referenced using the reference number with a variable type subscript index (e.g. 123_i).

### DETAILED DESCRIPTION

By way of a broad overview, as will be set out in detail below, various examples of the present disclosure provide a method, apparatus and computer program that derives GPS shift (i.e. GPS positioning errors due to signal run-time errors) using live GPS data from vehicles collected on a server (i.e. live probe data).

A key idea underlying examples of the present disclosure is that an MME of a probe/vehicle traveling on a single lane road essentially measures the component of the GPS shift orthogonal to the road segment. Any two map-matching errors from non-aligned (i.e. different and non-opposite headings, ideally close to right-angled) road segments span a two-dimensional space, and thus a GPS shift can be obtained by vector-space base-transformation.

In praxis, a map could be divided into tiles and for each tile:
- collect all pairs of single lane, non-aligned map segments
- for each pair, derive a GPS shift from MMEs of the two map segments (possibly with a reliability score based e.g. on the how close the segments are to being right-angled).
- average all the GPS shifts to obtain an overall GPS shift for the map tile (possibly weighed by reliability score).

If the overall GPS shift is reliable and relevant, the GPS shift for the map tile is applied to all GPS/probe data in the tile in order to correct the GPS position and rectify/accommodate for GPS shift. By averaging over plural/all segments, the average GPS shift only yields a significant overall shift if the plural individual GPS shifts from each pair substantially agree, i.e. if there was a systematic GPS shift in the area represented by the map tile. Otherwise the individual GPS shifts would be randomly distributed and, in effect, effectively cancel each other out such that their overall average would be very low/short. In this regard, one is in effect obtaining reliability in the net aggregate GPS drift "for free". i.e. it is effectively built in as long there is a "sufficient amount" of data in the area. This is because any unreliable data would result in very small (insignificant) differential position.

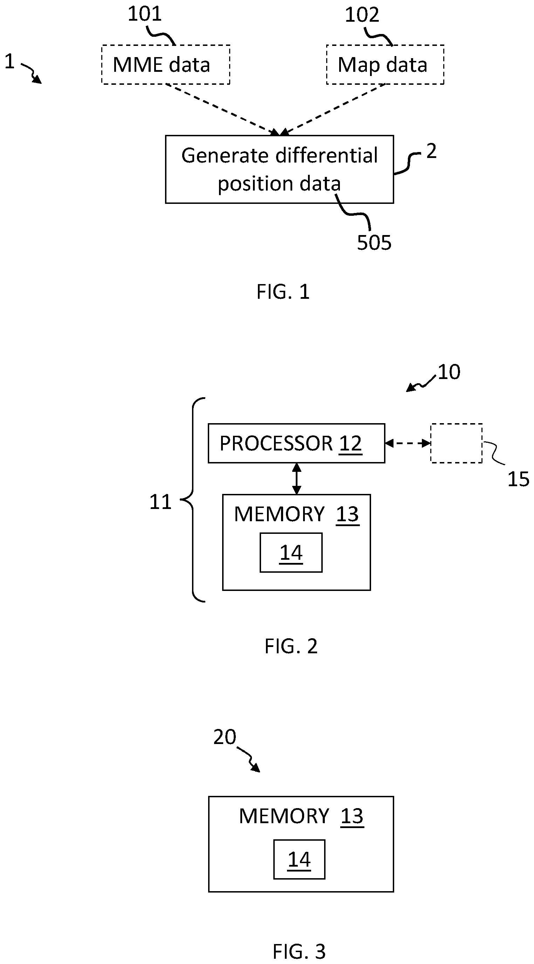

FIG. 1 schematically illustrates a flow chart of an example of a method 1. FIG. 1 can be considered to illustrate one or more functions/actions performed by or at by a single physical entity (such as an apparatus as described with reference to FIG. 2). The functions described can also be implemented by a computer program (such as is described with reference to FIG. 3). The blocks schematically illustrated in FIG. 1 can thereby represent actions in the method, functionality performed by the apparatus, and/or sections of instructions/code in the computer program.

During discussion of FIG. 1, for the purposes of explanation, reference will be made to other FIGs and reference numerals used therein, which are discussed further below.

In block 2, differential position data 505, for use in adjusting Global Navigation Satellite System, GNSS, positions, is generated based at least in part on Map Matching Error data 101 and map data 102. The differential position data is indicative of a difference in position 105 between a GNSS position 103 and an actual position 104 that the GNSS position represents/relates to. In this regard, the differential position data, may represent one or more of the following parameters: GPS shift, GPS position error correction, differential correction, Displacement for correcting GPS positioning error.

The difference in position 105 is determined based at least in part on:
i. first and second Map Matching Errors, MMEs 101_1 and 101 _2, each of which is respectively associated with first and second segments 102_1 and 102_2 of navigable elements of a network of navigable elements represented in a map (e.g. a digital map, or an electronic map), and
ii. orientations of the first and second segments.

As used herein, a "GNSS position" can be used to denote a satellite-derived position, i.e. position derived via GNSS signals received and processed by a GNSS receiver. A GNSS position can be, for example: a GPS position, a GPS fix, a GPS trace, a GPS trajectory or any other estimate of position that is determined or calculated based at least in part on GNSS signals received by a GNSS receiver.

GNSS positions may also be referred to as: probe data, probe positions, probe traces or Floating Car Data, FCD.

A probe can be considered to be a device that periodically determines and logs its own position as a function of time (e.g. via obtaining its GPS position for instance every five seconds), so as to generate a sequence of data points indicative of time-stamped geographic positions. Such time-stamped geographical positional data collected by such devices can be referred to as "probe data". The probe data may be provided/transmitted to, for example, a remote/central server for collation and processing. Positional data from a single device (e.g. a single "probe" or single "probe vehicle"), i.e. a series/sequence of positions obtained over time, can be referred to as a "probe trace" or simply "trace". In this regard a probe trace/trace can be seen as time-stamped positions from the same device/vehicle. Hence, each probe trace may represent movement of a single device/vehicle over a navigable network along segments of navigable elements thereof. Probe data can be considered as comprising a plurality of probe traces from a respective plurality of devices. The devices can also log other associated data (not least such as speed and/or direction of travel, as well as other sensor-derived observations/sensor data). Such associated data along with the positional data obtained from the devices can be included in the probe data. Alternative terms for probe data include: Floating Car Data, FCD; extended FCD (where associated data is also included with the positional data and wherein the associated data may be used to enhance the accuracy); and vehicle probe data (wherein the probe data is obtained from devices associated with vehicles - e.g. vehicles which the devices are in). References herein to GNSS positions should be understood as being interchangeable with probe positions and probe data.

As used herein, a "map" can be used to denote a digital map, also known as an electronic map, that comprises map data representative of longitudinal portions (i.e. segments) of navigable elements of a network of navigable elements in a geographical region. In the digital map, each is segment defined, at least in part, by an edge (or link) between two nodes. The position of the two nodes can be used to determine an orientation of the edge/segment. The edges/segments may be "directed", in that a direction of travel along the portion of the navigable element represented by the edge/segment may be indicated.

In the following discussion of examples of the disclosure, the navigable elements will be referred simply as roads, and the network of navigable elements is a road network. However, it is to be appreciated that in other examples, a navigable element could be a: foot path, hiking trail, cycle path, canal, tow path, river, railway line, or the like.

The digital map may define/represent a road network via a graph comprising links and nodes (logical connection of links). The links correspond to the roads, often discretized in "(road) portions/segments " or, to emphasize a directionality of the road "directed links/segments". Each road portion/link/segment may also have meta-data, such: a road name, speed limit, number of lanes etc. The digital map may also comprise information indicative of a center line that defines a geometry of the road. The center line may be a polyline (that describes an orientation, shape and or curvature of the link) that defines a "middle of the road".

Such digital maps may be used for route calculation and/or route guidance, not least by Portable Navigation Devices, PNDs, or other portable computing devices (not least such a smart phones) that include GNSS signal reception and processing functionality for positioning/determining a location of the device. In this regard, such devices may have the capability to determine one or more: "fixes", "raw" GNSS fixes or "enhanced" fixes - each fix being a time-stamped geo-position. Such PNDS/devices are well known and are widely employed as in-car or other vehicle navigation systems.

The differential position data generated in method 1, may represent one or more of the following parameters: GPS shift, GPS position error correction, Differential correction, Displacement for correcting GPS positioning error.

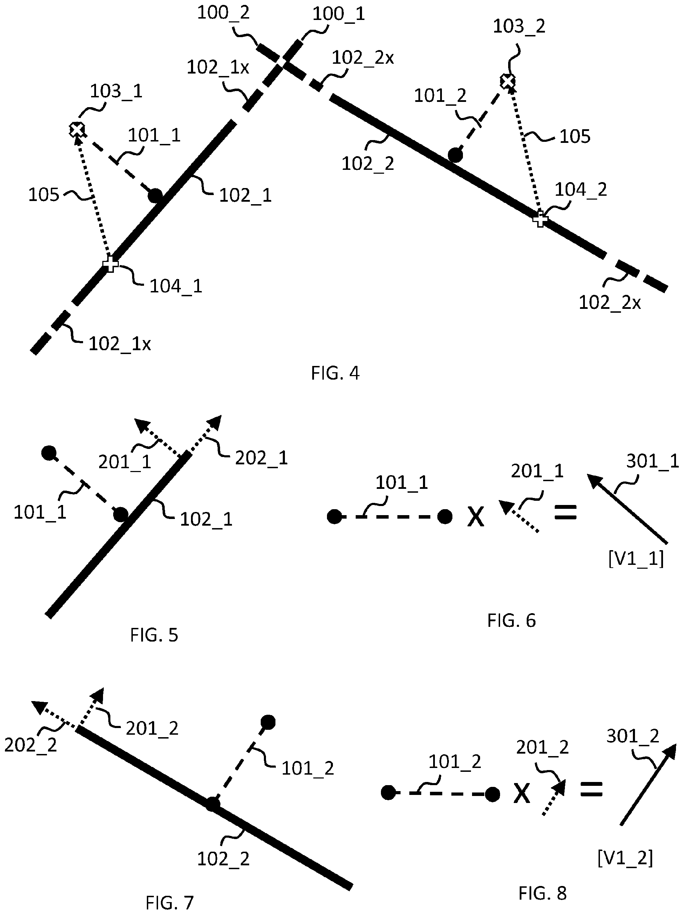

There now follows a description of the generation of differential position data with reference to FIGs. 4 to 10.

FIG. 4 shows a first segment 102_1 of a first navigable element 100_1, e.g. a first road, of a digital map. The first road is represented by plural other segments 102_1x (shown in dotted outline). Also shown in FIG. 4 is second segment 102_2 of a second road 100_2 (which may or may not be the same road as the first road) which is represented by plural other segments 102_2x (shown in dotted outline).

Also shown are a first GNSS position 103_1 and a second GNSS position 103_2 which, due to errors/inaccuracies in GNSS positioning (not least such as 'GPS shift' due to the GPS satellite signals being slowed down when passing through the ionosphere), do not precisely correspond to the actual/true respective first and second locations 104_1 and 104_2. This difference in position between a GNSS position and an actual position represented by the GNSS position (i.e. GNSS error/GPS shift), is shown with respect to arrow 105.

Examples of the present invention seek to determine the difference in position and use the same to generate differential position data to correct for the GNSS error/GPS shift.

A map matching procedure/algorithm is applied to each of the first and second GNSS positions.

The first and second GNSS positions (which may each be from a respective time-stamped list of positions/locations, i.e. a trace of locations, of individual first and second probes - 'probe data') are map-matched to the digital map. In this regard, a map-matching algorithm may be applied to the first and second GNSS positions/first and second probe data to match/assigned each of the first and second positions/probe data to a segment (i.e. an edge between two nodes) in the digital map that represents/defines a longitudinal portion of a road. The segment may be directed, e.g. a directed link indicative of a direction of use/travel along the segment.

The map matching/alignment process effectively results in a logical assignment of each GNSS position (e.g. single GPS fix or GPS trajectory of a probe/vehicle travelling along the road network) to a segment of a road.

In the example of FIG. 4, following on from the map matching process, the first GNSS position has been map matched to the first segment, and the second GNSS position has been map matched to the second segment.

For each segment, a map-matching error, MME, is evaluated. An MME is indicative of a displacement of a GNSS position relative to a segment to which the GNSS position has been map matched.

The MMEs may correspond to a lateral offset, relative to a center line of the road segment, for each GNSS position; i.e. a perpendicular displacement/separation distance between the GNSS position and its map-matched segment. The MME itself may be a scalar distance parameter (rather than a vector distance parameter).

In the example of FIG. 4, a first MME 101_1 is evaluated for the first segment/the first GNSS, and a second MME 101_2 is evaluated for the second segment/the second GNSS.

The first and second MMEs may be derived, at least in part, from respective first and second probe data from respective first and second probes wherein the first and second probe data comprises an indication of the first and second GNSS positions respectively.

The first and second MMEs may be obtained from MME data (101 of FIG. 1) wherein the MME data comprises data indicative of a plurality of MMEs associated with the plurality of segments, wherein each MME is indicative of a lateral displacement of at least one GNSS position relative to the segment to which the GNSS position has been matched.

Whilst the actual/true locations 104_1 and 104_2 (that the first and second GNSS positions 103_1 and 103_2 are merely estimates of) are not known, it can be assumed that the true locations do lie somewhere on the map-matched segments. This is because the GNSS positions are derived from probe data from probes (e.g. vehicles with GNSS receivers the determine and send their location to a remote server) traversing the road network and segments thereof. Hence, the first and second actual/true positions are constrained so as to lie on the first and second segments respectively.

As will be discussed in further detail below, examples of the present disclosure seek to determine differential position data (for correcting for GPS shift) based on MME data and map data (namely MMEs and orientation of segments associated with the MMEs). The differential position is determined by defining a first vector space having:
a first basis vector that is based at least in part on the first MME and the first perpendicular orientation; and
a second basis vector that is based at least in part on the second MME and the second perpendicular orientation.

The differential position is then determined by performing a vector space bases transformation of the first vector space to a second vector space (e.g. the map's vector space aligned with longitude and latitude orientations).

As shown in FIG.5, a first orientation 202_1 of the first segment 102_1 is determined from map data (102 of FIG. 1), wherein the map data is indicative of positions (i.e. locations and orientations/directions) of the plurality of segments. The first orientation 202_1 corresponds to the orientation of the first segment 102_1, i.e. an orientation/direction parallel to the first segment 102_1.

A first perpendicular orientation 201_1 is then determined from the first orientation, wherein the first perpendicular orientation is an orientation perpendicular to the orientation of the first segment.

FIG.6 schematically illustrates the determination of a first basis vector V1 _1 301 _1 of a first vector space V1. The first basis vector has a magnitude that corresponds to the first MME 101_1 and an orientation that corresponds to the first perpendicular direction 201_2.

FIG.7, shows the second segment 102_2 having a second orientation 202_2 (which can be derived from the map data 102 of FIG. 1). A second perpendicular orientation 201_2 is determined from the first orientation.

FIG.8 schematically illustrates the determination of a second basis vector V1_2 301_2 of the first vector space V1. The second basis vector has a magnitude that corresponds to the second MME 101_2 and an orientation that corresponds to the second perpendicular direction 201 _2.

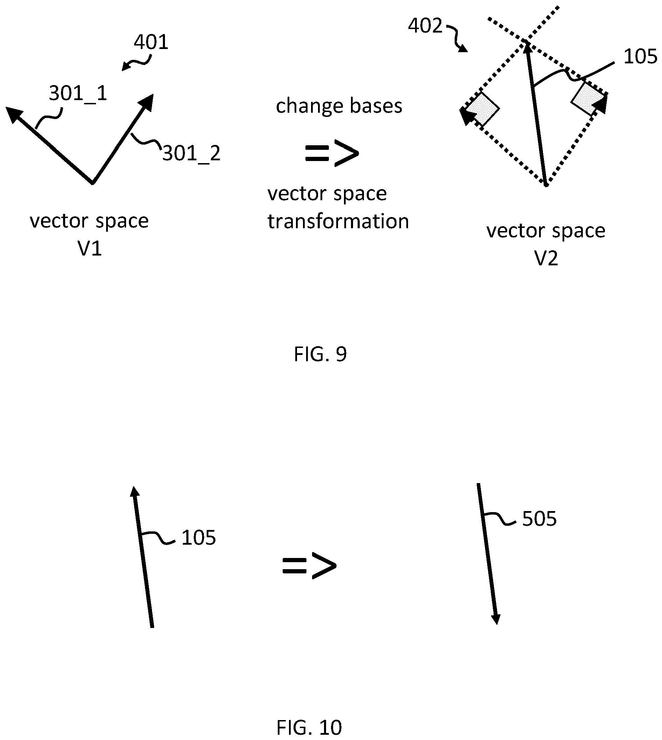

FIG. 9 schematically shows the first vector space V1 401 (having first and second basis vectors 301_1 and 301_2). Determination of the differential position 105 comprises performing a vector space bases transformation. In this regard, the vector bases 301_1 and 301_2 of the first vector space are changed/transformed into a second vector space. For instance, the vector bases 301_1 and 301_2 are transformed to a second vector space with standard/cartesian bases, i.e. whose vector bases are aligned with longitude and latitude orientations (such as is used for the vector bases used by the map).

FIG. 10 schematically illustrates the generation of differential position data 505 (for use in adjusting GNSS positions) based on the differential position 105.

Since the differential position 105 corresponds to a vector for going from a true location to a GNSS position (i.e. the GNSS estimation of the position that is offset due the GPS drift), in order to determine a difference in position from a GNSS position to an actual position represented by the GNSS position, the direction of the differential position 105 is inverted, i.e. an 180⁰ rotation.

The differential position data 105 can be applied to other GNSS positions to adjust them so as to compensate/correct for GPS shift. Such adjusted GNSS positions may thereby provide a greater degree of accuracy that the initial GNSS positions.

The enhanced position accuracy of the adjusted GNSS positions may provide lane level accuracy (not least for example a positioning accuracy less than 3 metres), i.e. sufficient accuracy so as to enable positioning down to the level of which specific lane of a multi-road a probe/GNSS receiver is located. This may thereby enable an identification/assignment of a lane of a road that a probe/GNSS receiver is located in. In other words, when performing map matching of an adjusted GNSS position of a vehicle, the map-matching may be refined so as not merely to assign a probe/vehicle to a specific segment of a road, but moreover to a specific lane of the specific segment.

Such lane level accuracy/identification/assignment may be advantageous for route guidance and navigation. Accurate GPS positioning and thus correct probe lane assignment may be a fundamental and key technology for many lane based traffic products and services, e.g. determining lane level flow, lane closures and fastest-lane.

The differential position data may be sent/broadcasted to one or more GNSS-based positioning devices. By doing so, the one or more GNSS-based positioning devices may be able to adjust their own determined GNSS positions.

In some examples, an apparatus, such as a server, may select, from a map, a plurality of pairs of segments, wherein each pair comprises different pair of first and second segments. The selected pairs of segments may correspond to the top N most perpendicular segment pairs. Preferably, each segments of a selected pair of segments of the map may be representative of a single lane.

Each first and second segment of each pair may be selected based on determining that one or more of the following criteria is met:
the first and second orientations of the first and second segments are not parallel (including in opposite directions);
the first and second orientations of the first and second segments are substantially perpendicular; and
an orthogonality of the first and second segments (for instance a difference in angle between the first and second orientations being substantially 90° (or 270°) or deviates from 90° (or 270°) within a threshold amount, i.e. 90 degrees + x degrees.

Differential positions may be determined for each of the plurality of pairs. Following which, an average of all the determined differential positions may be calculated.

By averaging plural determined differential positions (i.e. averaging the determined GPS shifts), this effectively provides a confidence check built in. If the determined differential positions/GPS shifts agree (i.e. are similar), their average will be also similar. Whereas, if the determined differential positions/GPS shifts are random they will effectively cancel each other out such that their overall average would be very low/short/vanish - and hence applying it to GPS positions would have no effect. The average GPS shift would only yields a significant overall shift if the plural individually calculated GPS shifts from each pair substantially agree, i.e. if there was a systematic GPS shift in the area represented by the map tile. Otherwise, the individual GPS shifts would be randomly distributed and, in effect, effectively cancel each other out such that their overall average would be very low/short.

The average could be a weighted average, wherein a weighting applied to each determined differential position is based at least in part on an orthogonality of the first and second segments of the particular pair for the respective determined differential position.

Each first and second segment of each pair may be selected based at least in part on a determination that the first and second segments are within an area of the map. The area of the map may be determined/defined so as to correspond to a geographic area within which GNSS drift for GNSS positions within the geographic area due to atmospheric perturbations is estimated to be the substantially same, i.e. an area over which GPS shift is expected to be constant/within a threshold variance.

The differential position data may be calculated for a particular area and used for adjusting GNSS positions within the area.

The differential position data may be calculated for a time period, i.e. a validity time period over which it is estimates that atmospheric perturbations are considered to be substantially constant, or within acceptable levels of variability.

The differential position data may be generated based on substantially live GNSS data/probe data collected by a server. The resultant differential position data may be associated with a validity time period and used for adjusting further/new GNSS positions generated within the validity time period.

In this regard, the above discussed first and second GNSS positions and the first and second MMEs may be determined substantially in real time and within a pre-determined time period from one another. The time period may be determined based at least in part on a time interval during which GPS drift due to atmospheric perturbations is estimated to be the constant. The differential position data may be repeatedly determined every time period.

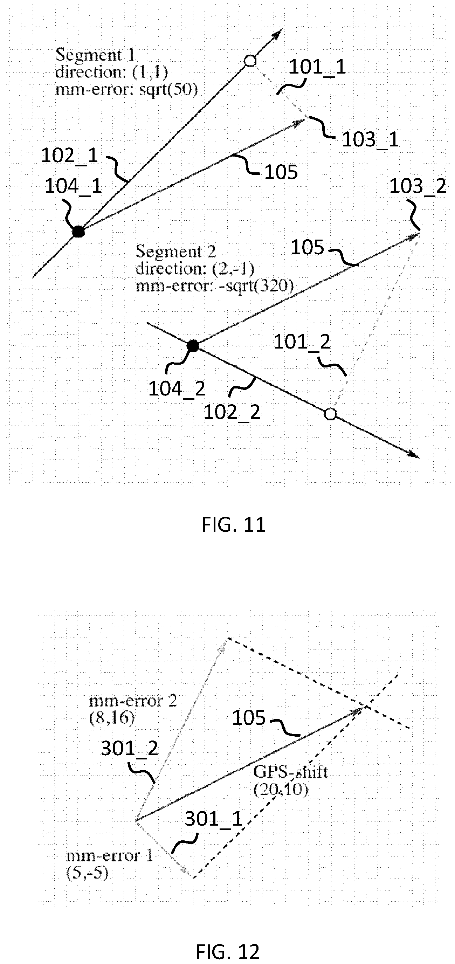

FIGs. 11 and 12 illustrate a further example of the subject matter of the present disclosure, namely relating to computing a difference in position 105 between a GNSS position 103_1 or 103_2 and an actual position represented by the GNSS position 104_1 or 104_2 (shown in the figure by a black dot).

The difference in position 105, i.e. GPS-shift, is unknown and is to be obtained.

The first and second GNSS positions 103_1 and 103_2 are known (from probe data), as are their respective first and second map matching errors 101_1 and 101_2 (from MME data, i.e. derived from the prop data and map data). The actual/true GNSS positions 104_1 and 104_2 are unknown - but it can be assumed that the location of these positions is constrained onto their respective map matched segment.

The direction/orientation of Segment 1, 102_1, is denoted by coordinates: east [m], north [m]). In this instance (1,1). The direction/orientation of Segment 1 is known, from map data.

First and second MMEs, i.e. an orthogonal projection of the respective GPS's coordinate onto its map matched segment, are indicated by reference numerals 101_1 and 101_2.

The white dots represent a map-matched position of each GPS fix (although this position is not used/relevant for the computation of the GPS shift)

In the first of the two images of FIG. 11, the inputs required for calculating the GPS shift are depicted: two map segments and their MMEs. The figure also visualizes how the MME evolves in the first place, namely due to the real position of the GPS receiver (which is unknown) being shifted (e.g. due to run-time errors/deviations of GPS satellite signals that are used in the calculation of the GPS position), which results in a lateral offset of the GPS position to the closest (orthogonal) point on the map matched segment.

FIG. 12 shows how to obtain the GPS-shift from two MME vectors (and orthogonal directions of the map segments). The figure shows the length and orientation of the first and second MMEs as represented by the arrow vectors 301_1 and 301_2. These two MME vectors are shown emanating from a common origin.

The dashed lines represent orthogonals to the MME vectors 301_1 and 301_2 (i.e. orthogonal lines, whose respective direction/orientation corresponds to the direction/orientation of their map matched segment). The intersections point of these orthogonals defines the GPS-shift 105.

In the example of FIGS 11 and 12, the exact values for the input and the GPS-shift are:
Input 1:
   direction of segment: (1,1)
   MME: (5,-5)
Input 2:
   direction of segment: (2,-1)
   MME: (8,16)
Output:
   GPS-shift: (20,10)

It will be understood that each block, combinations of blocks, as well as the functions/functionality illustrated in the figures and described above, can be implemented by various means, such as hardware, firmware, and/or software including one or more computer program instructions. For example, one or more of the functions described above can be performed by a duly configured apparatus (such as a server, a portable navigation device, an in-vehicle navigation device, a wireless communications device with GNSS positioning capability or any other computing device with means for performing the above described functionality). One or more of the functions/functionality described above can be embodied by a duly configured computer program (such as a computer program comprising computer program instructions which embody the functions/functionality described above and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions/functionality specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions/functionality specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

With reference to FIG. 2, there is provide a block diagram of an apparatus 10 for performing the methods, processes, and functionality described above and illustrated in the figures. The component blocks of FIG. 2 are functional and the functions described can be performed by a single physical entity not least such as a server or PND.

The apparatus comprises a controller 11, which could be provided within a device not least such as a server or PND.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a general-purpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example: a radio transceiver, sensors, input/output user interface elements and/or other modules/devices/components for inputting and outputting data/commands).

The memory 13 stores instructions such as a computer program 14 comprising such instructions (e.g. computer program instructions/code) that controls the operation of the apparatus 10 when loaded into the processor 12. The instructions of the computer program 14, provide the logic and routines that enables the apparatus to perform the methods, processes and procedures described in the present disclosure and illustrated in the figures. The processor 12 by reading the memory 13 is able to load and execute the computer program 14.

The instructions may be comprised in a computer program, a non-transitory computer readable medium, a computer program product, a machine readable medium.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components for effecting the methods, processes and procedures described in the present disclosure and illustrated in the figures. It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be: a server device, a client device, a portable device, a mobile device, a hand held device, an in-vehicle built-in device; mobile cellular telephone, a wireless communications device. The apparatus can be embodied by a computing device, not least such as those mentioned above. However, in some examples, the apparatus can be embodied as a chip, chip set, circuitry or module, i.e. for use in any of the foregoing.

In examples, the apparatus comprises:
at least one processor 12; and
at least one memory 13 storing instructions that, when executed by the at least one processor 12, cause the apparatus at least to:
   generate differential position data for use in adjusting Global Navigation Satellite System, GNSS, positions, wherein the differential position data is indicative of a difference in position between a GNSS position and an actual position represented by the GNSS position, wherein the difference in position is determined based at least in part on:
   first and second Map Matching Errors, MMEs respectively associated with first and second segments of navigable elements of a network of navigable elements represented in a map, and
   orientations of the first and second segments.

The apparatus can be for generating differential position data for compensating/correcting for GPS drift.

FIG. 3 illustrates a computer program 14 which may be conveyed via a delivery mechanism 20. The delivery mechanism 20 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 14. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus, cause the apparatus to perform at least the following or for causing performing at least the following:
generate differential position data for use in adjusting Global Navigation Satellite System, GNSS, positions, wherein the differential position data is indicative of a difference in position between a GNSS position and an actual position represented by the GNSS position, wherein the difference in position is determined based at least in part on:
first and second Map Matching Errors, MMEs respectively associated with first and second segments of navigable elements of a network of navigable elements represented in a map, and
orientations of the first and second segments.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components), i.e. so as to provide direct or indirect connection/coupling/communication. Any such intervening components can include hardware and/or software components.

As used herein, the term "determine/determining" (and grammatical variants thereof) can include, not least: evaluating, calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter (for example position or MME ...), or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A method comprising:
generating differential position data for use in adjusting Global Navigation Satellite System, GNSS, positions, wherein the differential position data is indicative of a difference in position between a GNSS position and an actual position represented by the GNSS position, wherein the difference in position is determined based at least in part on:
first and second Map Matching Errors, MMEs, respectively associated with first and second segments of navigable elements of a network of navigable elements represented in a map, and
orientations of the first and second segments.

2. The method of claim 1, wherein:
the first MME is an MME for a first GNSS position that has been map-matched to the first segment, wherein the first MME is indicative of a first displacement of the first GNSS position relative to the first segment; and
the second MME is an MME for a second GNSS position that has been map matched to the second segment, wherein the second MME is indicative of a second displacement of the second GNSS position relative to the second segment.

3. The method of any previous claim, further comprising:
determining a first orientation of the first segment;
determining a second orientation of the second segment;
determining first and second perpendicular orientations, wherein the first and second perpendicular orientations are perpendicular to the first and second orientations respectively; and
wherein the difference in position is determined based at least in part on:
the first and second perpendicular orientations.

4. The method of any previous claim, further comprising determining one or more adjusted GNSS positions by adjusting one or more GNSS positions based at least in part on the differential position data.

5. The method of claim 4, further comprising identifying a lane of a road based at least in part on the one or more adjusted GNSS positions.

6. The method of any previous claim, further comprising sending, to one or more GNSS-based positioning devices, the differential position data for enabling the one or more GNSS-based positioning devices to adjust their determined GNSS positions.

7. The method of any previous claim, further comprising selecting a plurality of pairs of segments, wherein each pair comprises different pair of first and second segments.

8. The method of claim 7, wherein each pair is selected based at least in part on a determination that one or more of the following criteria is met:
the first and second orientations are not parallel;
the first and second orientations are substantially perpendicular; and
an orthogonality of the first and second orientations.

9. The method of claim 7 or 8, further comprising:
generating differential position data for each of the plurality of pairs; and
determining an average of the differential position data for each of the plurality of pairs; and
optionally:
wherein the average is a weighted average, wherein a weighting applied to differential position data of a particular pair of the plurality of pairs is based at least in part on an orthogonality of the first and second segments of the particular pair.

10. The method of any previous claim, further comprising generating a reliability metric for the differential position data, wherein the reliability metric is based, at least in part, on an orthogonality of the first and second orientations.

11. The method of any previous claim, wherein the first and second segments are selected based at least in part on a determination that the first and second segments are within an area of the map; and optionally:
wherein the area of the map is determined based at least in part on a geographic area within which GNSS drift for GNSS positions within the geographic area due to atmospheric perturbations is estimated to be the substantially same.

12. The method of any previous claim, wherein: at least one of:
the second MME is determined within a time period from when the first MME is determined; and
the second GNSS position is determined within a time period from when the first GNSS position is determined.

13. The method of any previous claim, wherein the first and second segments are selected based at least in part on a determination that each of the first and second segments represents a single lane road.

14. An apparatus comprising means for performing the method of any of the previous claims.

15. A computer program comprising instructions which, when executed by an apparatus, cause the apparatus to perform the method as claimed in any of claims 1 - 13; optionally wherein the computer program is stored on a computer readable storage medium.
